(19) Europäisches Patentamt
European Patent Office
Office européen des brevets

(11) EP 3 002 978 B1

(12) EUROPEAN PATENT SPECIFICATION

(45) Date of publication and mention
of the grant of the patent:
14.02.2018 Bulletin 2018/07

(51) Int Cl.:
H04W 56/00 (2009.01)    H04W 64/00 (2009.01)

(21) Application number: 13888219.6

(86) International application number:
PCT/CN2013/078457

(22) Date of filing: 28.06.2013

(87) International publication number:
WO 2014/205815 (31.12.2014 Gazette 2014/53)

(54) **METHOD FOR REMOTE COVERAGE AND BASE STATION**

VERFAHREN FÜR REMOTE-ABDECKUNG UND BASISSTATION

PROCÉDÉ DE COUVERTURE DISTANTE ET STATION DE BASE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
06.04.2016 Bulletin 2016/14

(73) Proprietor: Huawei Technologies Co., Ltd.
Longgang District
Shenzhen, Guangdong 518129 (CN)

(72) Inventor: HE, Jianping
Shenzhen
Guangdong 518129 (CN)

(74) Representative: Gill Jennings & Every LLP
The Broadgate Tower
20 Primrose Street
London EC2A 2ES (GB)

(56) References cited:
EP-A2- 2 104 248          WO-A1-2009/058073
WO-A2-2013/048332       CN-A- 102 273 284
CN-A- 102 469 445         CN-A- 103 002 569
US-A1- 2002 160 787       US-B1- 7 006 534

## Description

## TECHNICAL FIELD

The present invention relates to communications technologies, and in particular, to a long-distance coverage method and a base station.

## BACKGROUND

With development of mobile communications networks, comprehensive networks are preliminarily formed to provide coverage for inland areas, but some outlying areas, such as sea, islands, deserts, grasslands, and remote rural areas, have very low coverage. To improve coverage and provide more comprehensive communications networks, a large number of base stations need to be deployed in these outlying areas according to conventional site deployment. This, however, requires heavy investment.

Therefore, there is an urgent need for a solution to not only reduce deployment of sites but also resolve a low coverage problem in the outlying areas.

US 7006534 relates to radio communication system and method for calculating transmission timing between a terminal unit and a base station based upon location, distance, or propagation time.

## SUMMARY

Embodiments of the present invention provide a long-distance coverage method and a base station, so as to resolve a low coverage problem in outlying areas, and to improve coverage in the outlying areas without greatly increasing costs.

The method and the base station of the present invention are as set out in the independent claims. Further features of each of these aspects are set out in the corresponding dependent claims.

According to the long-distance coverage method and the base station provided in the embodiments of the present invention, a downlink sending moment and/or an uplink receiving moment of a base station are or is adjusted, to eliminate a transmission delay caused by long-distance communication and to implement long-distance coverage of the base station without changing an existing network protocol.

## BRIEF DESCRIPTION OF DRAWINGS

FIG. 1 is a flowchart of an embodiment of a long-distance coverage method according to the present invention;
FIG. 2 is a simplified schematic diagram of a coverage area of a base station according to the embodiment shown in FIG. 1;

FIG. 3 is a simplified schematic diagram of an expanded coverage area of a base station according to the embodiment shown in FIG. 1;
FIG. 4 is a signal time sequence diagram according to the embodiment shown in FIG. 1;
FIG. 5 is another signal time sequence diagram according to the embodiment shown in FIG. 1;
FIG. 6 is a schematic diagram of a structure of a base station according to an embodiment of the present invention; and
FIG. 7 is a schematic diagram of a structure of a base station according to another embodiment of the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

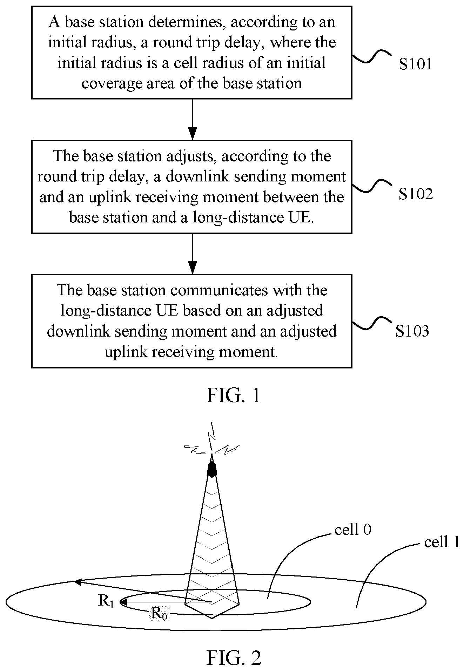

FIG. 1 is a flowchart of an embodiment of a long-distance coverage method according to the present invention. The method is applicable to improvement of a coverage area of a base station on the premise that a terminal is not changed and an existing network protocol remains unchanged, and the method may be executed by a base station on various mobile communications networks, especially a frequency division duplex (Frequency Division Duplex, FDD for short) base station on a Long Term Evolution (Long Term Evolution, LTE for short) network. The following embodiments are described by using an eNodeB as an example. As shown in FIG. 1, the method may be executed according to the following process:

S101. A base station determines, according to an initial radius, a round trip delay, where the initial radius is a cell radius of an initial coverage area of the base station.

Specifically, FIG. 2 is a simplified schematic diagram of a coverage area of a base station according to the embodiment shown in FIG. 1. Referring to FIG. 2, a cell coverage area of the eNodeB is usually set for the eNodeB, and the coverage area is a best geographic coverage area that is determined based on a transmit capability of a base station and network planning of an operator. The coverage area is theoretically considered as a circular area in the present invention. The network planning may include factors such as an operating frequency that is set for the base station, and transmit power of an antenna. To describe long-distance coverage in the present invention, a previous coverage area of the eNodeB is referred to as an initial coverage area, and correspondingly an initial radius is a cell radius of the initial coverage area. To implement long-distance coverage of the eNodeB, an initial radius $R_0$ of the eNodeB may be used as a lower limit of a long-distance coverage area that is set for the base station. That is, an inner ring radius of a ring area cell 1 is set based on an initial coverage area cell 0 of the eNodeB, and the inner ring radius and an outer ring radius $R_1$ form the ring area cell 1 for long-distance coverage, thereby increasing the coverage area of the eNodeB. A location of the base station is considered as a center of these circular areas.

On the other hand, for a mobile communications network, a network protocol specifies a value range of a timing advance (Timing Advance, TA for short) value, that is, time backward that is allowed to meet time alignment when an uplink synchronization signal of UE reaches the eNodeB. For example, in an LTE network protocol, a TA value range that may be set by an FDD eNodeB is: $0 \leq TA \leq 20512\ T_s$, where $T_S = 1/30720000$ seconds, which is equivalent to that a cell radius of the base station is limited. For example, for Global System for Mobile Communications (Global System for Mobile Communications, GSM for short), a maximum cell radius of a base station is theoretically 35 km; for LTE, a maximum cell radius of an eNodeB is theoretically 100 km. For UEs that are located outside the initial coverage area of the eNodeB, because transmission delays exceed a range, allowed to be adjusted, of time backward, uplink and downlink frames cannot remain synchronous at an antenna port of the base station for these UEs.

To implement the long-distance coverage of the eNodeB, it is necessary to eliminate a transmission delay in interaction between long-distance UE and the eNodeB. The transmission delay is divided into two segments for consideration in the present invention. A first segment of the transmission delay is a transmission delay within the initial radius $R_0$ of the eNodeB, and a second segment of the transmission delay is a transmission delay from an actual location of the long-distance UE to the initial radius $R_0$. The second segment of the transmission delay may be resolved by setting a TA value for the eNodeB according to the existing protocol. The first segment of the transmission delay is a problem that needs to be resolved in the present invention.

To eliminate the first segment of the transmission delay, a round trip delay that is generated within the initial radius $R_0$ set by the eNodeB needs to be known first, where the round trip delay is a transmission delay from a time at which a signal that is sent by the UE at $R_0$ away from the eNodeB, to a time at which the signal arrives at the eNodeB, and from a time at which the signal returns from the eNodeB to the UE, to a time at which the signal arrives at the UE. Preferably, a formula (1) is used to calculate the round trip delay:

$$\Delta T = \frac{2R_0}{C} \qquad (1)$$

where $\Delta T$ is the round trip delay, $R_0$ is the initial radius, and C is a speed of light. In this case, a space transmission delay can be jointly born by both the TA value and the round trip delay $\Delta T$.

S102. The base station adjusts, according to the round trip delay, a downlink sending moment and an uplink receiving moment between the base station and a long-distance UE.

Specifically, after the round trip delay $\Delta T$ is determined, to implement that uplink and downlink frames of the long-distance UE are synchronous at the antenna port of the eNodeB, the uplink receiving moment and the downlink sending moment of the eNodeB may be adjusted.

For example, to eliminate the round trip delay $\Delta T$, the downlink sending moment of the eNodeB may be set backward $\Delta T$ based on the downlink sending moment before the adjustment, or the uplink receiving moment of the eNodeB may be set forward $\Delta T$ based on the uplink receiving moment before the adjustment. Alternatively, the downlink sending moment and the uplink receiving moment of the eNodeB may be adjusted at the same time, provided that a sum of an amount of time backward and an amount of time forward is equal to $\Delta T$.

Preferably, if the amount of time backward of the downlink sending moment is equal to zero, the amount of time forward of the uplink receiving moment is equal to the round trip delay, or if the amount of time forward of the uplink receiving moment is equal to zero, the amount of time backward of the downlink sending moment is equal to the round trip delay. That is, adjusting only the downlink sending moment or the uplink receiving moment of the eNodeB is preferably used. An advantage of doing so is to decrease complexity of base station setting.

S103. The base station communicates with the long-distance UE based on an adjusted downlink sending moment and an adjusted uplink receiving moment.

Specifically, this step may be performed according to the following process:

The base station delivers the TA value to the long-distance UE;
the base station sends a downlink signal to the long-distance UE at the adjusted downlink sending moment; and
the base station receives, at the adjusted uplink receiving moment, an uplink signal sent by the long-distance UE.

Optionally, before this step, the method may further include: determining, by the base station according to a transmit capability of the base station and network planning of an operator, that the UE is a long-distance UE. Referring to FIG. 2, the long-distance UE is a UE located in the ring area cell 1, and the UE for which the eNodeB can support long-distance communication needs to be determined by considering the transmit capability of the eNodeB and the network planning of the operator, that is, an upper limit $R_1$ of the ring area cell 1 needs to be determined by considering these factors. Further, from a perspective of a long-distance coverage area of the eNodeB only in theory, a distance R' between the long-distance UE and the base station must meet $R_0 \leq R' \leq R_0 + \Delta R$, where $\Delta R$ is a radius corresponding to a maximum coverage area theoretically determined according to the network planning of the operator, and $\Delta R$ is less than or equal to a maximum cell radius stipulated in the protocol, for example, $\Delta R \leq 100km$ on an LTE network.

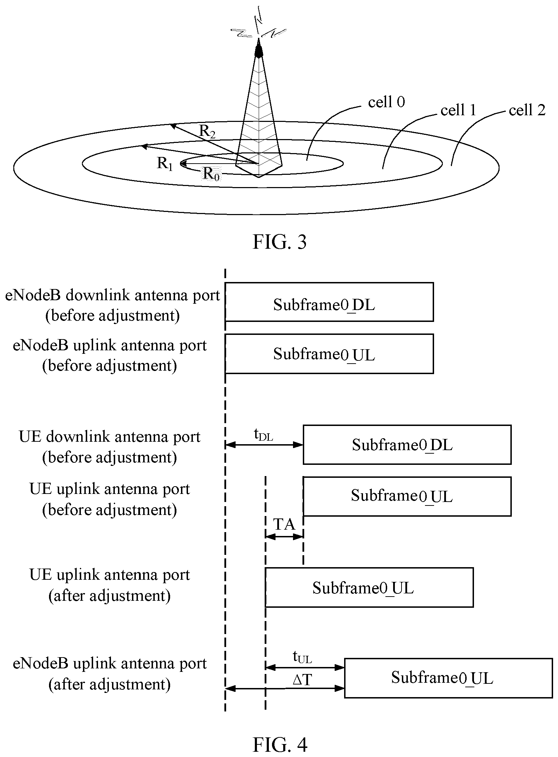

Further, FIG. 3 is a simplified schematic diagram of an expanded coverage area of the base station according to the embodiment shown in FIG. 1. The long-distance coverage method in the present invention may continue to be executed based on the adjusted long-distance coverage of the base station. As shown in FIG. 3, after the coverage area of the eNodeB is adjusted, the coverage area has become the cell 1. In this case, one more initial radius may be set and the radius is equal to $R_1$, that is, a coverage area cell 2 is formed and its radius $R_2$ is determined in a way similar to that of the radius $R_1$. In addition, a process of adjusting a downlink sending moment and an uplink receiving moment is consistent with the foregoing process, and details are not described herein again.

In this embodiment, a downlink sending moment and/or an uplink receiving moment of a base station are or is adjusted, to eliminate a transmission delay caused by long-distance communication and to implement long-distance coverage of the base station without changing an existing network protocol.

The following illustrates the present invention by using different scenarios.

Scenario 1: The base station implements the long-distance coverage by setting forward an uplink receiving moment.

FIG. 4 is a signal time sequence diagram according to the embodiment shown in FIG. 1. As shown in FIG. 4, the eNodeB may determine the round trip delay $\Delta T$ according to the initial radius $R_0$, and the transmission delay between the long-distance UE and the eNodeB is a sum of a downlink delay $t_{DL}$ and an uplink delay $t_{UL}$. In this case, the transmission delay from the location of the long-distance UE to the initial radius $R_0$ is compensated by the TA value, that is, $t_{DL} + t_{UL} = \Delta T + TA$.

In this scenario, the uplink receiving moment of the eNodeB is set forward $\Delta T$, that is, an adjusted uplink antenna port of the eNodeB in this figure is set forward $\Delta T$ compared with an uplink antenna port of the eNodeB before adjustment.

Scenario 2: The base station implements the long-distance coverage by setting backward a downlink sending moment.

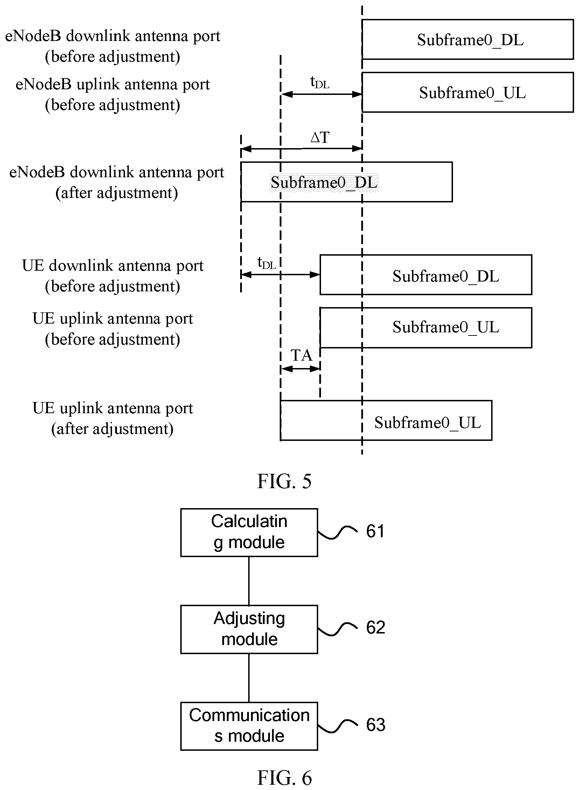

FIG. 5 is another signal time sequence diagram according to the embodiment shown in FIG. 1. As shown in FIG. 5, the downlink sending moment of the eNodeB is set backward $\Delta T$, that is, an adjusted downlink antenna port of the eNodeB in this figure is set backward $\Delta T$ compared with a downlink antenna port of the eNodeB before adjustment.

FIG. 6 is a schematic diagram of a structure of a base station according to an embodiment of the present invention. As shown in FIG. 6, the base station may include a calculating module 61, an adjusting module 62, and a communications module 63. The calculating module 61 may be configured to determine, according to an initial radius, a round trip delay, where the initial radius is a cell radius of an initial coverage area of the base station; the adjusting module 62 may be configured to adjust, according to the round trip delay, a downlink sending moment and an uplink receiving moment between the base station and long-distance user equipment UE; and the communications module 63 may be configured to communicate with the long-distance UE based on an adjusted downlink sending moment and an adjusted uplink receiving moment.

Optionally, the communications module 63 may be specifically configured to: before communicating with the long-distance UE based on the adjusted downlink sending moment and the adjusted uplink receiving moment, determine, according to a transmit capability of the base station and network planning of an operator, that the UE is long-distance UE.

Optionally, the adjusting module 62 may be specifically configured to: calculate, by the base station, the round trip delay according to the formula (1).

Optionally, if an amount of time backward of the downlink sending moment is equal to zero, an amount of time forward of the uplink receiving moment is equal to the round trip delay, or if an amount of time forward of the uplink receiving moment is equal to zero, an amount of time backward of the downlink sending moment is equal to the round trip delay.

Optionally, the communications module 62 may be specifically configured to: deliver a TA value to the long-distance UE; send a downlink signal to the long-distance UE at the adjusted downlink sending moment; and receive, at the adjusted uplink receiving moment, an uplink signal sent by the long-distance UE.

The apparatus of this embodiment may be used to execute a technical solution in any method embodiment. For a specific function of the apparatus, refer to the foregoing method embodiment. Details are not described herein again.

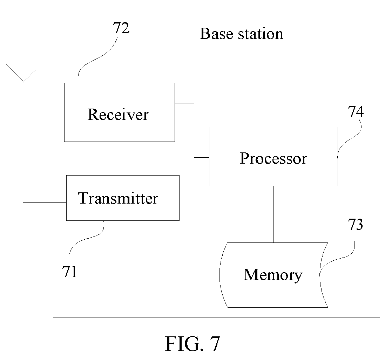

FIG. 7 is a schematic diagram of a structure of a base station according to another embodiment of the present invention. As shown in FIG. 7, the base station may include: a transmitter 71, a receiver 72, a memory 73, and a processor 74 that is separately connected to the transmitter 71, the receiver 72, and the memory 73, where the memory 73 stores a group of program code, and the processor 74 is configured to invoke the program code stored in the memory 73 to execute a technical solution in the foregoing method embodiment. For a specific function of the base station, refer to the foregoing method embodiment. Details are not described herein again.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor (processor) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A long-distance coverage method, comprising:

   determining (101), by a base station according to an initial radius, a round trip delay, wherein the initial radius is a cell radius of an initial coverage area of the base station;
   adjusting (102), by the base station according to the round trip delay, a downlink sending moment and an uplink receiving moment between the base station and long-distance user equipment UE; and
   communicating (103), by the base station, with the long-distance UE based on an adjusted downlink sending moment and an adjusted uplink receiving moment;
   wherein the communicating (103), by the base station, with the long-distance UE based on an adjusted downlink sending moment and an adjusted uplink receiving moment comprises:

      delivering, by the base station, a timing advance TA value to the long-distance UE;
      sending, by the base station, a downlink signal to the long-distance UE at the adjusted downlink sending moment; and
      receiving, by the base station at the adjusted uplink receiving moment, an uplink signal sent by the long-distance UE.

2. The method according to claim 1, before the communicating (103), by the base station, with the long-distance UE based on an adjusted downlink sending moment and an adjusted uplink receiving moment, further comprising:

      determining, by the base station according to a transmit capability of the base station and network planning of an operator, that the UE is a long-distance UE.

3. The method according to claim 1 or 2, wherein the determining (101), by a base station according to an initial radius, a round trip delay comprises:

      calculating, by the base station according to a formula $\Delta T = \dfrac{2R_0}{C}$, the round trip delay, wherein $\Delta T$ is the round trip delay, $R_0$ is the initial radius, and C is a speed of light.

4. The method according to any one of claims 1 to 3, wherein:

      if an amount of time backward of the downlink sending moment is equal to zero, an amount of time forward of the uplink receiving moment is equal to the round trip delay; or
      if an amount of time forward of the uplink receiving moment is equal to zero, an amount of time backward of the downlink sending moment is equal to the round trip delay.

5. A base station, comprising:

      a calculating module (61), configured to determine, according to an initial radius, a round trip delay, wherein the initial radius is a cell radius of an initial coverage area of the base station; an adjusting module (62), configured to adjust, according to the round trip delay, a downlink sending moment and an uplink receiving moment between the base station and long-distance user equipment UE; and
a communications module (63), configured to communicate with the long-distance UE based on an adjusted downlink sending moment and an adjusted uplink receiving moment;
wherein the communications module is specifically configured to: deliver a timing advance TA value to the long-distance UE; send a downlink signal to the long-distance UE at the adjusted downlink sending moment; and receive, at the adjusted uplink receiving moment, an uplink signal sent by the long-distance UE.

6. The base station according to claim 5, wherein the communications module (63) is specifically configured to: before communicating with the long-distance UE based on the adjusted downlink sending moment and the adjusted uplink receiving moment, determine, according to a transmit capability of the base station and network planning of an operator, that the UE is a long-distance UE.

7. The base station according to claim 5 or 6, wherein the adjusting module (62) is specifically configured to:

   calculate, according to a formula $\Delta T = \dfrac{2R_0}{C}$, the round trip delay, wherein $\Delta T$ is the round trip delay, $R_0$ is the initial radius, and C is a speed of light.

8. The base station according to any one of claims 5 to 7, wherein:

   if an amount of time backward of the downlink sending moment is equal to zero, an amount of time forward of the uplink receiving moment is equal to the round trip delay; or
   if an amount of time forward of the uplink receiving moment is equal to zero, an amount of time backward of the downlink sending moment is equal to the round trip delay.

9. A base station, comprising: a transmitter (71), a receiver (72), a memory (73), and a processor (74) that is separately connected to the transmitter (71), the receiver (72), and the memory (73), wherein the memory (73) stores a group of program code, and the processor (74) is configured to invoke the program code stored in the memory (73) to execute the method according to any one of claims 1 to 4.

**Patentansprüche**

1. Langstrecken-Abdeckungsverfahren, umfassend:

   Bestimmen (101) einer Gesamtlaufzeit durch eine Basisstation gemäß einem anfänglichen Radius, wobei der anfängliche Radius ein Zellenradius eines anfänglichen Abdeckungsgebiets der Basisstation ist;
   Justieren (102) eines Abwärtsstrecken-Sendemoments und eines Aufwärtsstrecken-Empfangsmoments zwischen der Basisstation und einem Langstrecken-Benutzergerät UE durch die Basisstation gemäß der Gesamtlaufzeit; und
   Kommunizieren (103) mit dem Langstrecken-UE durch die Basisstation auf der Basis eines justierten Abwärtsstrecken-Sendemoments und eines justierten Aufwärtsstrecken-Empfangsmoments;
   wobei das Kommunizieren (103) mit dem Langstrecken-UE durch die Basisstation auf der Basis eines justierten Abwärtsstrecken-Sendemoments und eines justierten Aufwärtsstrecken-Empfangsmoments Folgendes umfasst:

      Abliefern eines Vorhaltezeit- bzw. TA-Werts an das Langstrecken-UE;
      Senden eines Abwärtsstreckensignals zu dem Langstrecken-UE durch die Basisstation an dem justierten Abwärtsstrecken-Sendemoment; und
      Empfangen eines durch das Langstrecken-UE gesendeten Aufwärtsstreckensignals durch die Basisstation an dem justierten Aufwärtsstrecken-Empfangsmoment.

2. Verfahren nach Anspruch 1, das vor dem Kommunizieren (103) mit dem Langstrecken-UE durch die Basisstation auf der Basis eines justierten Abwärtsstrecken-Sendemoments und eines justierten Aufwärtsstrecken-Empfangsmoments ferner Folgendes umfasst:

   Bestimmen, dass das UE ein Langstrecken-UE ist, durch die Basisstation gemäß einer Sendefähigkeit der Basisstation und Netzplanung eines Betreibers.

3. Verfahren nach Anspruch 1 oder 2, wobei Bestimmen (101) einer Gesamtlaufzeit durch eine Basisstation gemäß einem anfänglichen Radius Folgendes umfasst:

   Berechnen der Gesamtlaufzeit durch die Basisstation gemäß einer Formel $\Delta T = \dfrac{2R_0}{C}$, wobei $\Delta T$ die Gesamtlaufzeit, $R_0$ der anfängliche

Radius und C eine Lichtgeschwindigkeit ist.

4. Verfahren nach einem der Ansprüche 1 bis 3, wobei wenn eine Zeitdauer rückwärts des Abwärtsstrecken-Sendemoments gleich null ist, eine Zeitdauer vorwärts des Aufwärtsstrecken-Empfangsmoments gleich der Gesamtlaufzeit ist; oder wenn eine Zeitdauer vorwärts des Aufwärtsstrecken-Empfangsmoments gleich null ist, eine Zeitdauer rückwärts des Abwärtsstrecken-Sendemoments gleich der Gesamtlaufzeit ist.

5. Basisstation, umfassend:

ein Berechnungsmodul (61), ausgelegt zum Bestimmen einer Gesamtlaufzeit gemäß einem anfänglichen Radius, wobei der anfängliche Radius ein Zellenradius eines anfänglichen Abdeckungsgebiets der Basisstation ist; ein Justierungsmodul (62), ausgelegt zum Justieren eines Abwärtsstrecken-Sendemoments und eines Aufwärtsstrecken-Empfangsmoments zwischen der Basisstation und dem Langstrecken-Benutzergerät UE gemäß der Gesamtlaufzeit; und ein Kommunikationsmodul (63), ausgelegt zum Kommunizieren mit dem Langstrecken-UE auf der Basis eines justierten Abwärtsstrecken-Sendemoments und eines justierten Aufwärtsstrecken-Empfangsmoments; wobei das Kommunikationsmodul speziell ausgelegt ist zum Abliefern eines Vorhaltezeit- bzw. TA-Werts an das Langstrecken-UE; Senden eines Abwärtsstreckensignals zu dem Langstrecken-UE an dem justierten Abwärtsstrecken-Sendemoments; und Empfangen eines durch das Langstrecken-UE gesendeten Aufwärtsstreckensignals an dem justierten Aufwärtsstrecken-Empfangsmoment.

6. Basisstation nach Anspruch 5, wobei das Kommunikationsmodul (63) speziell ausgelegt ist zum Bestimmen gemäß einer Sendefähigkeit der Basisstation und Netzplanung eines Betreibers, dass das UE ein Langstrecken-UE ist, vor dem Kommunizieren mit dem Langstrecken-UE auf der Basis des justierten Abwärtsstrecken-Sendemoments und des justierten Aufwärtsstrecken-Empfangsmoments.

7. Basisstation nach Anspruch 5 oder 6, wobei das Justierungsmodul (62) speziell ausgelegt ist zum Berechnen der Gesamtlaufzeit gemäß einer Formel

$$\Delta T = \frac{2R_0}{C}$$ , wobei $\Delta T$ die Gesamtlaufzeit, $R_0$ der anfängliche Radius und C eine Lichtgeschwindigkeit ist.

8. Basisstation nach einem der Ansprüche 5 bis 7, wobei wenn eine Zeitdauer rückwärts des Abwärtsstrecken-Sendemoments gleich null ist, eine Zeitdauer vorwärts des Aufwärtsstrecken-Empfangsmoments gleich der Gesamtlaufzeit ist; oder wenn eine Zeitdauer vorwärts des Aufwärtsstrecken-Empfangsmoments gleich null ist, eine Zeitdauer rückwärts des Abwärtsstrecken-Sendemoments gleich der Gesamtlaufzeit ist.

9. Basisstation, umfassend:

einen Sender (71), einen Empfänger (72), einen Speicher (73) und einen Prozessor (74), der getrennt mit dem Sender (71), dem Empfänger (72) und dem Speicher (73) verbunden ist, wobei der Speicher (73) eine Gruppe von Programmcode speichert und der Prozessor (74) ausgelegt ist zum Aufrufen des in dem Speicher (73) gespeicherten Programmcodes zur Ausführung des Verfahrens nach einem der Ansprüche 1 bis 4.

**Revendications**

1. Procédé de couverture à grande distance, comprenant :

la détermination (101), par une station de base conformément à un rayon initial, d'un retard aller-retour, dans lequel le rayon initial est un rayon de cellule d'une zone initiale de couverture de la station de base ; l'ajustement (102), par la station de base conformément au retard aller-retour, d'un moment d'envoi de liaison descendante et d'un moment de réception de liaison montante entre la station de base et un équipement utilisateur UE à grande distance ; et la communication (103), par la station de base, avec l'UE à grande distance sur la base d'un moment d'envoi de liaison descendante ajusté et d'un moment de réception de liaison montante ajusté ; dans lequel la communication (103), par la station de base, avec l'UE à grande distance sur la base d'un moment d'envoi de liaison descendante ajusté et d'un moment de réception de liaison montante ajusté comprend :

la fourniture, par la station de base, d'une valeur d'avance de temporisation TA à l'UE à grande distance ; l'envoi, par la station de base, d'un signal de liaison descendante à l'UE à grande distance au moment d'envoi de liaison descendante ajusté ; et
la réception, par la station de base au moment de réception de liaison montante ajusté, d'un signal de liaison montante envoyé par l'UE à grande distance.

2. Procédé selon la revendication 1, comprenant en outre, avant la communication (103), par la station de base, avec l'UE à grande distance sur la base d'un moment d'envoi de liaison descendante ajusté et d'un moment de réception de liaison montante ajusté :

   la détermination, par la station de base conformément à une capacité de transmission de la station de base et à la planification de réseau d'un opérateur, que l'UE est un UE à grande distance.

3. Procédé selon la revendication 1 ou 2, dans lequel la détermination (101), par une station de base conformément à un rayon initial, d'un retard aller-retour comprend :

   le calcul, par la station de base conformément à une formule $\Delta t = \frac{2R_0}{C}$, du retard aller-retour, dans lequel $\Delta T$ est le retard aller-retour, $R_0$ est le rayon initial, et $C$ est une vitesse de la lumière.

4. Procédé selon l'une quelconque des revendications 1 à 3, dans lequel :

   si un temps précédant le moment d'envoi de liaison descendante est égal à zéro, un temps consécutif au moment de réception de liaison montante est égal au retard aller-retour ; ou
   si un temps consécutif au moment de réception de liaison montante est égal à zéro, un temps précédant le moment d'envoi de liaison descendante est égal au retard aller-retour.

5. Station de base, comprenant :

   un module de calcul (61), configuré pour déterminer, conformément à un rayon initial, un retard aller-retour, dans lequel le rayon initial est un rayon de cellule d'une zone initiale de couverture de la station de base ;
   un module d'ajustement (62), configuré pour ajuster, conformément au retard aller-retour, un moment d'envoi de liaison descendante et un moment de réception de liaison montante entre la station de base et un équipement utilisateur UE à grande distance ; et
   un module de communication (63), configuré pour communiquer avec l'UE à grande distance sur la base d'un moment d'envoi de liaison descendante ajusté et d'un moment de réception de liaison montante ajusté ;
dans laquelle le module de communication est plus précisément configuré pour :

   délivrer une valeur d'avance de temporisation TA à l'UE à grande distance ;
   envoyer un signal de liaison descendante à l'UE à grande distance au moment d'envoi de liaison descendante ajusté ; et recevoir, au moment de réception de liaison montante ajusté, un signal de liaison montante envoyé par l'UE à grande distance.

6. Station de base selon la revendication 5, dans laquelle le module de communication (63) est plus précisément configuré pour : avant de communiquer avec l'UE à grande distance sur la base du moment d'envoi de liaison descendante ajusté et du moment de réception de liaison montante ajusté, déterminer, conformément à une capacité de transmission de la station de base et à la planification de réseau d'un opérateur, que l'UE est un UE à grande distance.

7. Station de base selon la revendication 5 ou 6, dans laquelle le module d'ajustement (62) est plus précisément configuré pour :

   calculer, conformément à une formule $\Delta t = \frac{2R_0}{C}$, le retard aller-retour, dans laquelle $\Delta T$ est le retard aller-retour, $R_0$ est le rayon initial, et $C$ est une vitesse de la lumière.

8. Station de base selon l'une quelconque des revendications 5 à 7, dans laquelle :

   si un temps précédant le moment d'envoi de liaison descendante est égal à zéro, un temps consécutif au moment de réception de liaison montante est égal au retard aller-retour ; ou
   si un temps consécutif au moment de réception de liaison montante est égal à zéro, un temps précédant le moment d'envoi de liaison descendante est égal au retard aller-retour.

9. Station de base, comprenant :

   un émetteur (71), un récepteur (72), une mémoire (73), et un processeur (74) qui est séparément connecté à l'émetteur (71), au récepteur (72) et à la mémoire (73), dans lequel la mémoire (73) stocke un groupe de codes de programme, et le processeur (74) est configuré pour appeler le code de programme stocké dans la mémoire (73) pour exécuter le procédé selon l'une quelconque des revendications 1 à 4.

A base station determines, according to an initial radius, a round trip delay, where the initial radius is a cell radius of an initial coverage area of the base station

S101

The base station adjusts, according to the round trip delay, a downlink sending moment and an uplink receiving moment between the base station and a long-distance UE.

S102

The base station communicates with the long-distance UE based on an adjusted downlink sending moment and an adjusted uplink receiving moment.

S103

FIG. 1

cell 0

cell 1

$R_1$

$R_0$

FIG. 2

FIG. 3

FIG. 4

eNodeB downlink antenna port
(before adjustment)

eNodeB uplink antenna port
(before adjustment)

$t_{DL}$

Subframe0_DL

Subframe0_UL

$\Delta T$

eNodeB downlink antenna port
(after adjustment)

Subframe0_DL

UE downlink antenna port
(before adjustment)

$t_{DL}$

Subframe0_DL

UE uplink antenna port
(before adjustment)

Subframe0_UL

TA

UE uplink antenna port
(after adjustment)

Subframe0_UL

FIG. 5

Calculating module — 61

Adjusting module — 62

Communications module — 63

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7006534 B